# EUROPÄISCHE PATENTSCHRIFT

(11) **EP 2 241 001 B1**
(45) Veröffentlichungstag und Bekanntmachung des Hinweises auf die Patenterteilung: **03.01.2018**
(21) Anmeldenummer: 09708167.3
(22) Anmeldetag: 03.02.2009
(51) Int. Cl.: H02M 5/458, H02M 7/483

(54) **UMRICHTER**
CONVERTER
CONVERTISSEUR

(30) Priorität: 06.02.2008 DE 102008007659
(43) Veröffentlichungstag der Anmeldung: 20.10.2010
(73) Patentinhaber: Siemens Aktiengesellschaft, 80333 München (DE)
(72) Erfinder: HILLER, Marc, 91207 Lauf an der Pegnitz (DE); SOMMER, Rainer, 91336 Heroldsbach (DE)
(86) Internationale Anmeldenummer: PCT/EP2009/051201
(87) Internationale Veröffentlichungsnummer: WO 2009/098201

(56) Entgegenhaltungen:
- WO-A-2007/028349
- MASWOOD A I ET AL: "NEAR UNITY INPUT DISPLACEMENT FACTOR FOR VOLTAGE SOURCE PWM DRIVES" 2001 IEEE POWER ENGINEERING SOCIETY. WINTER MEETING. CONFERENCE PROCEEDINGS. COLUMBUS, OH, JAN. 28 - FEB. 1, 2001; [IEEE POWER ENGINEERING SOCIETY WINTER MEETING], NEW YORK, NY : IEEE, US, 28. Januar 2001 (2001-01-28), Seiten 1388-1392, XP001042882 ISBN: 978-0-7803-6672-5
- HAGIWARA M ET AL: "A 21-level (line-to-line) BTB system based on series connection of sixteen converter-cells for power flow control: experimental verifications by a 200-V, 10-kW laboratory system" INDUSTRY APPLICATIONS CONFERENCE, 2004. 39TH IAS ANNUAL MEETING. CONFE RENCE RECORD OF THE 2004 IEEE SEATTLE, WA, USA 3-7 OCT. 2004, PISCATAWAY, NJ, USA,IEEE, Bd. 3, 3. Oktober 2004 (2004-10-03), Seiten 1432-1438, XP010735292 ISBN: 978-0-7803-8486-6
- POLS VAN DER E K H ET AL: "DESIGN AND IMPLEMENTATION OF A SINGLE-BOARD MOTOR SUPPLY CONTROLLER" EPE '97. 7TH. EUROPEAN CONFERENCE ON POWER ELECTRONICS AND APPLICATIONS. TRONDHEIM, SEPT. 8 - 10, 1997; [EPE . EUROPEAN CONFERENCE ON POWER ELECTRONICS AND APPLICATIONS], BRUSSELS, EPE ASSOCIATION, B, Bd. CONF. 7, 8. September 1997 (1997-09-08), Seiten 2.543-2.548, XP000792339 ISBN: 978-90-75815-02-3

## Beschreibung

Die Erfindung bezieht sich auf einen Umrichter mit einem netz- und lastseitigen Stromrichter, die gleichspannungsseitig miteinander elektrisch leitend verbunden sind, wobei jeweils ein oberer und ein unterer Ventilzweig eines jeden Phasenmoduls des lastseitigen mehrphasigen Stromrichters wenigstens ein zweipoliges Subsystem aufweist.

In der Antriebstechnik, insbesondere für Mittelspannung, kommen eine Vielzahl von unterschiedlichen Schaltungstopologien und Leistungshalbleiter zum Einsatz. Die üblicher Weise im Mittelspannungs-Industriestromrichtern eingesetzten Schaltungstopologien lassen sich grob in drei Schaltungskategorien einteilen, nämlich in Spannungszwischenkreis-Umrichter, Stromzwischenkreis-Umrichter und Direktumrichter in Thyristortechnik. Die Spannungszwischenkreis-Umrichter lassen sich außerdem in zwei Unterkategorien einteilen, nämlich in Umrichter in Dreieckschaltung und Umrichter in Sternschaltung. Typische Vertreter der Umrichter in Dreieckschaltung sind beispielsweise ein 3-Level Neutral-Point-Clamped (3L-NPC) mit 12-pulsiger Diodeneinspeisung und ein 4-Level Flying-Capacitor (4L-FC) mit 12-pulsiger Diodeneinspeisung. Typische Vertreter von Spannungszwischenkreis-Umrichter in Sternschaltung sind beispielsweise ein Series-connected H-Bridge Zellenumrichter mit 2-Level H-Brücken pro Zelle (SC-HB (2L)) und ein Series-connected H-Bridge Zellenumrichter mit 3-Level H-Brücke pro Zelle (SC-HB (3L)). Charakteristisch für die Dreieckschaltung ist die bei gleicher Ausgangsspannung im Vergleich zur Sternschaltung höhere Spannungsbelastung der Halbleiterschaltung bei einer gleichzeitigen geringeren Strombelastung. Umrichter mit einer SC-HB-Topologie ermöglichen durch ihre Modularität sogar im Mittelspannungsbereich den Einsatz niedersperrender Halbleiterschalter bei reduzierter Zellenzahl.

Ersatzschaltbilder der oben genannten Umrichter-Topologien für Mittelspannung sind in der Veröffentlichung mit dem Titel "Stromrichterschaltungen für Mittelspannung und deren Leistungshalbleiter für den Einsatz in Industriestromrichtern", von Max Beuermann, Marc Hiller und Dr. Rainer Sommer, abgedruckt im Tagungsband der ETG-Tagung "Bauelemente der Leistungselektronik und ihre Anwendung", Bad Nauheim 2006.

Aus der Veröffentlichung "Modulares Stromrichterkonzept für Netzkupplungsanwendung bei hohen Spannungen", von Rainer Marquardt, Anton Lesnicar und Jürgen Hildinger, abgedruckt im Tagungsband der ETG-Tagung 2002, ist ein Umrichter mit einem netz- und lastseitigen Stromrichter, die gleichspannungsseitig miteinander elektrisch leitend verbunden sind, bekannt, wobei als Stromrichter jeweils ein modularer Mehrpunkt-Stromrichter, auch als Modular Multilevel Converter (M2C) bezeichnet, verwendet wird. Ein derartiger Spannungszwischenkreis-Umrichter mit einem netz- und lastseitigen Stromrichter in M2C-Topologie weist gegenüber den bereits beschriebenen Spannungszwischenkreis-Umrichtern keinen aus Zwischenkreiskondensatoren aufgebauten Spannungszwischenkreis mehr auf. Jeder Ventilzweig eines jeden Phasenmoduls des Umrichters in M2C-Topologie weist wenigstens ein zweipoliges Subsystem auf. Durch die Anzahl der verwendeten Subsysteme eines jeden Ventilzweiges wird die Stufigkeit einer Phasen-Ausgangsspannung bestimmt.

Der Erfindung liegt nun die Aufgabe zugrunde, einen Spannungszwischenkreis-Umrichter mit einem lastseitigen Stromrichter in M2C-Topologie anzugeben, der einfacher und kostengünstiger ist.

Diese Aufgabe wird erfindungsgemäß durch einen Umrichter mit einem netz- und lastseitigen Stromrichter gelöst, die gleichspannungsseitig miteinander elektrisch leitend verbunden sind, wobei jeweils ein oberer und ein unterer Ventilzweig eines jeden Phasenmoduls des lastseitigen mehrphasigen Stromrichters wenigstens ein zweipoliges Subsystem aufweist, wobei als netzseitiger Stromrichter wenigstens zwei mehrphasige netzgeführte Stromrichter vorgesehen sind, die gleichspannungsseitig elektrisch in Reihe geschaltet sind und wechselspannungsseitig jeweils mit einer Sekundärwicklung eines Netztransformators verknüpft sind.

Dadurch, dass als netzseitiger Stromrichter wenigstens ein mehrphasiger, netzgeführter Stromrichter vorgesehen ist, erhält man einen Spannungszwischenkreis-Umrichter mit einem lastseitigen Stromrichter in M2C-Topologie, der eine einfache und kostengünstige Einspeiseschaltung aufweist. Gegenüber bekannten Spannungszwischenkreis-Umrichtern weist der Umrichter nach der Erfindung im Spannungszwischenkreis keinen Zwischenkreis-Kondensator mehr auf. Durch den nicht notwendigerweise niederinduktiven Aufbau des Zwischenkreises und durch den fehlenden Zwischenkreiskondensator wird ein Zwischenkreis-kurzschluss im Vergleich zu herkömmlichen Umrichtern sehr unwahrscheinlich. Dadurch muss der gesamte Umrichter, insbesondere die Stromrichterventile des netzseitigen, netzgeführten Stromrichters, nicht mehr für einen durch einen niederohmigen Zwischenkreis-Kurzschluss hervorgerufenen Kurzschlussstrom ausgelegt werden. Außerdem kann die i²t-Anforderung der Stromrichterventile des netzseitigen netzgeführten Stromrichters des erfindungsgemäßen Umrichters gegenüber einem bekannten Spannungszwischenkreis-Umrichter mit Diodeneinspeisung und Zwischenkreis-Kondensator deutlich reduziert werden.

Bei einer vorteilhaften Ausführungsform des erfindungsgemäßen Umrichters ist als mehrphasiger netzgeführter Stromrichter ein mehrphasiger Diodengleichrichter vorgesehen. Somit erhält man eine besonders einfache und kostengünstige Einspeisung.

Bei einer weiteren vorteilhaften Ausführungsform des erfindungsgemäßen Umrichters ist als mehrphasiger netzgeführter Stromrichter ein mehrphasiger Thyristorgleichrichter bzw. eine halbgesteuerte Brücke vorgesehen. Somit werden die Modulkondensatoren des lastseitigen Stromrichters in M2C-Topologie durch das Hochfahren der Gleichspannung mittels des netzseitigen Thyristorgleichrichters aufgeladen. Dadurch kann auf eine Vorladeschaltung, die bei einer Diodeneinspeisung notwendig ist, verzichtet werden. Außerdem kann im Anfahrbereich einer vom lastseitigen Stromrichter in M2C-Topologie gespeisten Last dieser Stromrichter bei kleinen Ausgangsspannungen im Bereich der Vollaussteuerung betrieben werden. Bei einem Stromrichter in M2C-Topologie kann der Energieinhalt, d.h., die mittlere Spannung der Modulkondensatoren der zweipoligen Subsysteme dieses Stromrichters in M2C-Topologie, unabhängig von der Zwischenkreisspannung und unabhängig von der Ausführungsform der Einspeiseschaltung geregelt werden.

Bei einer weiteren vorteilhaften Ausführungsform des Umrichters nach der Erfindung ist als mehrphasiger netzgeführter Stromrichter ein mehrphasiger Thyristor-Umkehrstromrichter vorgesehen. Dadurch kann gegenüber der Ausführungsform mit einem mehrphasigen Thyristorgleichrichter Energie von einer Last in ein speisendes Netz rückgespeist werden.

Zur weiteren Erläuterung der Erfindung wird auf die Zeichnung Bezug genommen, in der mehrere Ausführungsformen eines erfindungsgemäßen Umrichters schematisch veranschaulicht sind.
- FIG 1: zeigt ein Schaltbild eines bekannten Umrichters mit einem netz- und lastseitigen Stromrichter jeweils in M2C-Topologie, in der
- FIG 2: ist ein Schaltbild eines Umrichters nach der Erfindung dargestellt, die
- FIG 3: zeigt ein Schaltbild einer 6-pulsigen Diodenbrücke, wobei in der
- FIG 4: ein Schaltbild einer 6-pulsigen Thyristorbrücke dargestellt ist, und in der
- FIG 5: ist ein Schaltbild eines 6-pulsigen Thyristor-Umkehrstromrichters dargestellt, wobei die
- FIG 6 und 7: jeweils ein Schaltbild einer weiteren Ausführungsform eines Umrichters nach der Erfindung veranschaulichen.

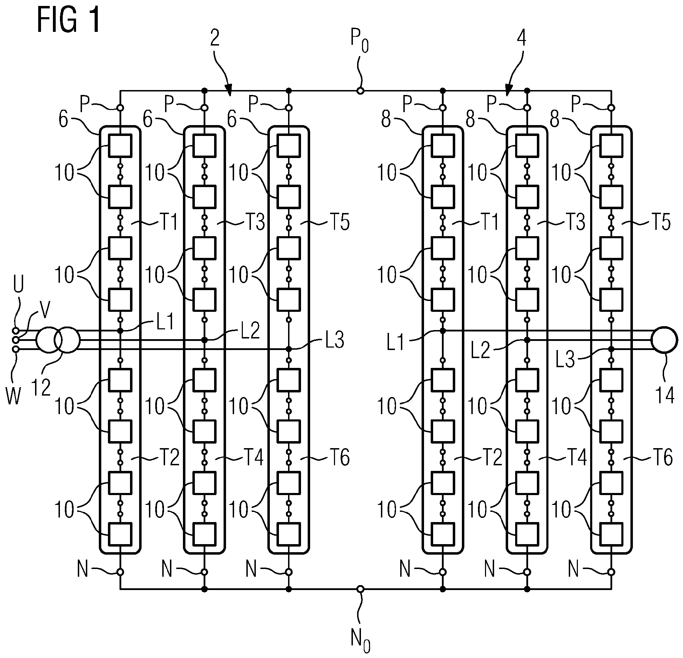

Die FIG 1 zeigt ein Schaltbild eines Umrichters, insbesondere eines Spannungszwischenkreis-Umrichters, mit einem netz- und lastseitigen Stromrichter 2 und 4, die jeweils als M2C-Stromrichter ausgebildet sind. Ein derartiger Umrichter ist aus der bereits genannten Veröffentlichung der ETG-Tagung 2002 bekannt. In der dargestellten Ausführungsform sind die beiden Stromrichter 2 und 4 des Umrichters dreiphasig ausgebildet. Somit weisen die Stromrichter 2 und 4 jeweils drei Phasenmodule 6 bzw. 8 auf, die gleichspannungsseitig mit einer positiven Gleichspannungs-Sammelschiene P₀ und mit einer negativen Gleichspannungs-Sammelschiene N₀ elektrisch leitend verbunden sind. Zwischen diesen Gleichspannungs-Sammelschienen P₀ und N₀ fällt eine nicht näher bezeichnete Gleichspannung an. Jedes Phasenmodul 6 bzw. 8 des netz- und lastseitigen Stromrichters 2 und 4 weist einen oberen und unteren Ventilzweig T1,T3,T5 und T2,T4,T6 auf. Jeder dieser Ventilzweige T1-T6 weist eine Anzahl von elektrisch in Reihe geschalteten zweipoligen Subsysteme 10 auf. Im dargestellten Schaltbild weist jeder Ventilzweig T1-T6 vier zweipolige Subsysteme 10 auf. Ausführungsbeispiele dieser zweipoligen Subsysteme 10 sind in der DE 101 03 031 A1 und in der DE 10 2005 041 087 A1 näher dargestellt und ihre Funktionsweisen erläutert. Jeder Verknüpfungspunkt beider Stromrichterventile T1 und T2 bzw. T3 und T4 bzw. T5 und T6 eines Phasenmoduls 10 des netz- bzw. lastseitigen Stromrichters 2 bzw. 4 bilden einen wechselspannungsseitigen Anschluss L1 bzw. L2 bzw. L3. An den wechselspannungsseitigen Anschlüssen L1,L2 und L3 des netzseitigen Stromrichters 2 ist eine Sekundärwicklung eines Netztransformators 12 angeschlossen, dessen Primärwicklung mit einem nicht näher dargestellten speisenden Drehstromnetz verbunden ist. An den wechselspannungsseitigen Anschlüssen L1, L2 und L3 des lastseitigen Stromrichters 4 ist eine Last, insbesondere eine Drehstrommaschine 14, angeschlossen.

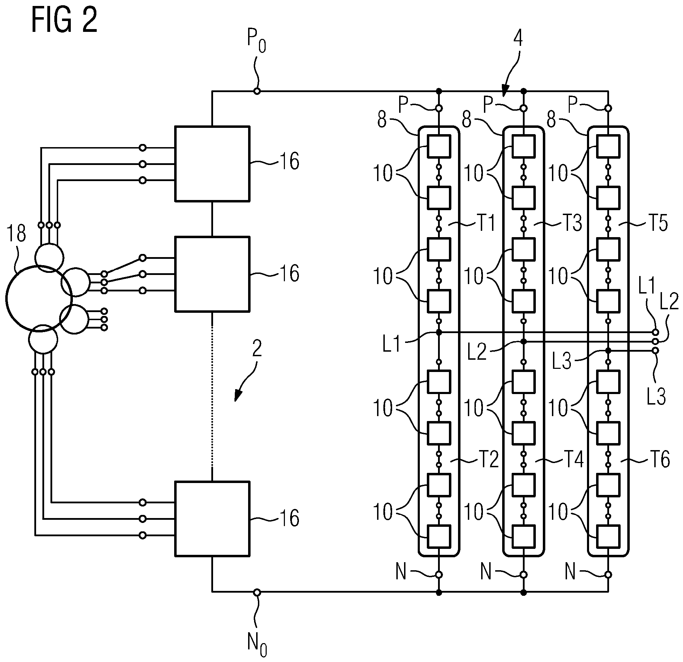

In der FIG 2 ist ein Prinzipschaltbild eines Umrichters, insbesondere eines Spannungszwischenkreis-Umrichters, nach der Erfindung dargestellt. Dieser erfindungsgemäße Umrichter unterscheidet sich vom bekannten Umrichter gemäß FIG 1 dadurch, dass als netzseitiger Stromrichter 2 mehrere mehrphasige netzgeführte Stromrichter 16 vorgesehen sind, die gleichspannungsseitig elektrisch in Reihe geschaltet sind. Die netzgeführten Stromrichter 16 können gleichspannungsseitig auch parallel oder reihen- und parallel geschaltet werden. Als Einspeiseschaltung kann auch nur ein mehrphasiger netzgeführter Stromrichter 16 vorgesehen sein. Wechselspannungsseitig ist ein Netztransformator 18 vorgesehen, der entsprechend der Anzahl der netzgeführten Stromrichter 16 Sekundärwicklungen aufweist. Vorzugsweise weisen diese Sekundärwicklungen untereinander jeweils einen vorbestimmten Verschiebungswinkel auf. Wie groß diese Verschiebungswinkel sind, hängt von der Anzahl der gleichspannungsseitig elektrisch in Reihe geschalteter netzgeführter Stromrichter 16 ab.

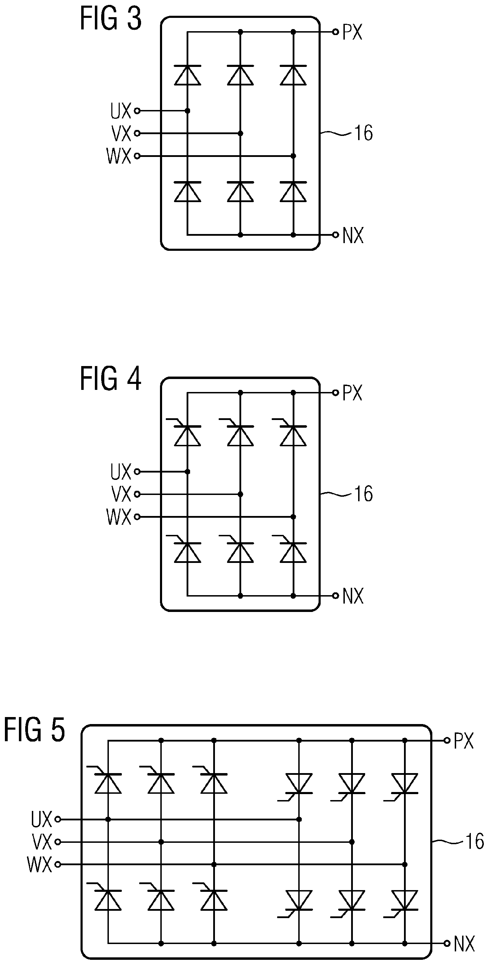

In der FIG 3 ist eine erste Ausführungsform eines netzgeführten Stromrichters 16 schematisch dargestellt. Dabei handelt es sich um eine 6-pulsige Diodenbrückenschaltung. Werden zwei von diesen 6-pulsigen Diodenbrückenschaltungen gleichspannungsseitig elektrisch in Reihe geschaltet, so erhält man einen 12-pulsigen netzseitigen Stromrichter 2. Die beiden 6-pulsigen Diodenbrückenschaltungen werden mittels eines Standardtransformators, bestehend aus einer Sekundärwicklung in Dreieck- und einer Sekundärwicklung in Sternschaltung, an ein speisendes Netz angeschlossen. Werden drei 6-pulsige Diodenbrückenschaltungen gleichspannungsseitig in Reihe geschaltet, so erhält man eine 18-Pulsschaltung für den netzseitigen Stromrichter 2. Je höher die Pulszahl dieses netzseitigen Stromrichters 2 ist, umso geringer ist die Netzbelastung des speisenden Netzes mit Harmonischen. Damit diese geringe Netzbelastung eintritt, müssen die wechselspannungsseitigen Netzspannungen ux,vx und wx jeweils eines der beiden 6-pulsigen Diodenbrücken zueinander einen Verschiebungswinkel (z.B. von 30° el. bei 12-Pulsschaltung) aufweisen. Dies wird beispielsweise dadurch erreicht, dass von den beiden Sekundärwicklungen eine in Dreieck und die andere in Stern geschaltet sind.

Eine zweite Ausführungsform eines netzgeführten Stromrichters 16 ist in der FIG 4 näher dargestellt. Bei dieser Ausführungsform handelt es sich um einen Thyristorgleichrichter in einer 6-pulsigen Brückenschaltung. Mittels dieser Ausführungsform des netzgeführten Stromrichters 16 kann unabhängig von der Netzspannung eines speisenden Netzes die Zwischenkreis-Gleichspannung auf einen vorbestimmten Wert eingestellt werden. Außerdem besteht die Möglichkeit, die Modulkondensatoren der zweipoligen Subsysteme 10 aufzuladen, wodurch keine separate Vorladeschaltung mehr benötigt wird. Dies gilt auch für eine halbgesteuerte Thyristorbrücke.

Soll Energie von der Last 14 in ein speisendes Netz rückgespeist werden, so wird anstelle einer 6-pulsigen Diodenbrücke gemäß FIG 3 oder anstelle einer 6-pulsigen Thyristorbrücke gemäß FIG 4 als netzgeführter Stromrichter 16 ein Thyristor-Umkehrstromrichter gemäß FIG 5 verwendet.

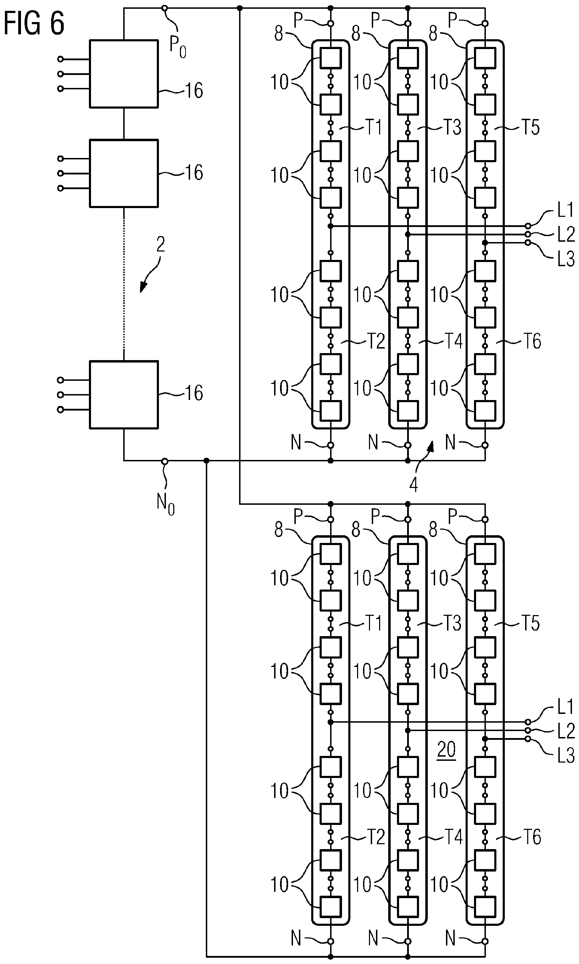

In der FIG 6 ist ein Schaltbild einer weiteren Ausführungsform des Umrichters nach der Erfindung dargestellt. Diese Ausführungsform unterscheidet sich von der Ausführungsform gemäß FIG 2 dadurch, dass ein weiterer lastseitiger Stromrichter 20 in M2C-Topologie vorgesehen ist. Dieser weitere lastseitige Stromrichter 20 ist wie der erste lastseitige Stromrichter 4 ebenfalls als dreiphasiger M2C-Stromrichter ausgebildet. Gleichspannungsseitig ist dieser weitere netzseitige Stromrichter 20 mit der positiven und mit der negativen Gleichspannungs-Sammelschiene P₀ und N₀ des Umrichters elektrisch leitend verbunden. Mittels eines solchen Umrichters mit zwei lastseitigen Stromrichtern 4 und 20 und einem netzseitigen aus wenigstens zwei elektrisch in Reihe geschalteter netzgeführter Stromrichter 16 bestehenden Stromrichter 2 können gleichzeitig zwei Lasten 14 getrennt voneinander geregelt werden. Da bei diesem Spannungszwischenkreis-Umrichter kein zentraler Zwischenkreiskondensator mehr vorhanden ist, gibt es keine besonderen Anforderungen hinsichtlich eines induktivitätsarmen Aufbaus des Umrichters. Außerdem wird dadurch die installierte Stromrichter-Bauleistung des netzseitigen Stromrichters 2, der wenigstens zwei gleichspannungsseitig elektrisch in Reihe geschaltete netzgeführte Stromrichter 16 aufweist, ausgeschöpft.

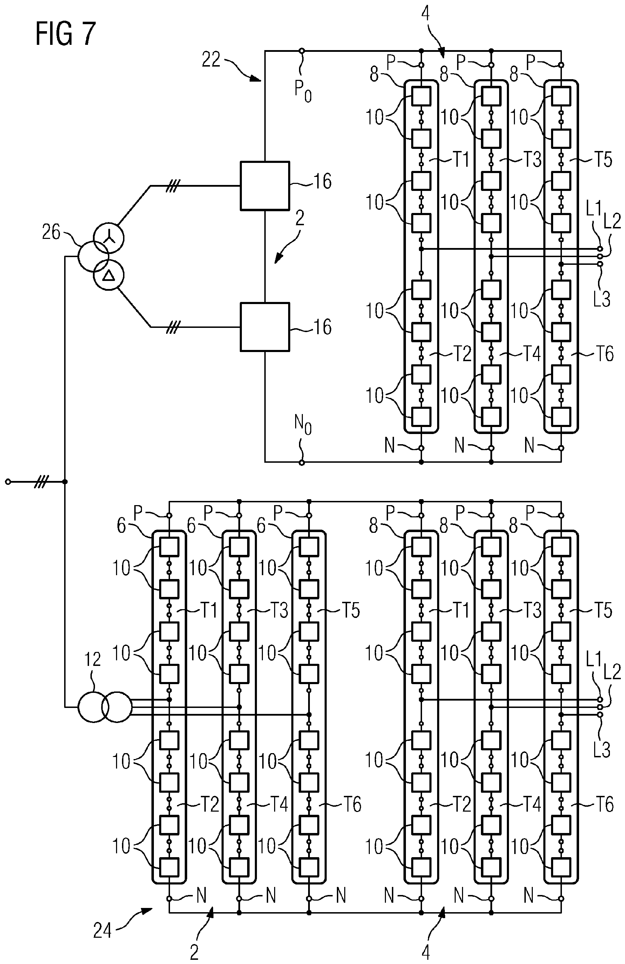

In der FIG 7 ist ein Schaltbild einer weiteren Ausführungsform des Umrichters nach der Erfindung dargestellt. Diese Ausführungsform unterscheidet sich von der Ausführungsform gemäß FIG 2 dadurch, dass eine Umrichtereinheit 22 und eine Umrichtereinheit 24 miteinander kombiniert sind. Die Umrichtereinheit 22 entspricht dem Umrichter gemäß FIG 2, wobei der netzseitige Stromrichter 2 nur zwei netzgeführte Stromrichter 16 aufweist, die gleichspannungsseitig elektrisch in Reihe geschaltet sind. Dementsprechend weist ein Netztransformator 26 nur zwei Sekundärwicklungen auf. Eine dieser beiden Sekundärwicklungen ist in Stern geschaltet, wogegen die andere Sekundärwicklung in Dreieck geschaltet ist. Dadurch erhält man eine 12-pulsige Einspeiseschaltung. Die Umrichtereinheit 24 entspricht dem Umrichter gemäß FIG 1. Diese beiden Umrichtereinheiten 22 und 24 werden parallel betrieben. Dabei kann die Umrichtereinheit 24 derart betrieben werden, dass diese die Oberschwingungsströme des netzseitigen Stromrichters 2 der Umrichtereinheit 22 und dessen Blindleistung kompensieren kann.

Mit der Kombination eines netzseitigen Stromrichters 2 der wenigstens zwei gleichspannungsseitig elektrisch in Reihe geschaltete netzgeführte Stromrichter 16 aufweist, mit einem lastseitigen Stromrichter 4, der als Modular Multilevel Converter (M2C) ausgebildet ist, erhält man einen Spannungszwischenkreis-Umrichter, der gegenüber den bekannten Ausführungsformen eines Spannungszwischenkreis-Umrichters für Mittelspannung in der Unterkategorie "Umrichter in Dreieckschaltung" keinen aus wenigstens einem Kondensator aufgebauten Spannungszwischenkreis mehr aufweist. Gegenüber bekannten Spannungszwischenkreis-Umrichtern für Mittelspannung in der Unterkategorie "Umrichter in Sternschaltung" werden anstelle von H-Brücken für Zellenumrichter nun zweipolige Subsysteme 10 verwendet, wobei ebenfalls im Mittelspannungsbereich niedersperrende Halbleiterschalter, insbesondere IGBT mit einer Sperrspannung von 1,7 kV, eingesetzt werden. Somit erhält man einen Spannungszwischenkreis-Umrichter für Mittelspannung der eine einfache Diodeneinspeisung mit einem Standardtransformator 26 für Stromrichteranwendungen und einem nicht notwendigerweise niederinduktiven Zwischenkreis ohne Energiespeicher mit einem lastseitigen Zellenumrichter mit reduziertem Aufwand kombiniert, so dass nur die Vorteile der bekannten Umrichter in Dreieckschaltung und Sternschaltung zum Tragen kommen.

## Patentansprüche

1. Umrichter mit einem netz- und lastseitigen Stromrichter (2,4), die gleichspannungsseitig miteinander elektrisch leitend verbunden sind, wobei jeweils ein oberer und ein unterer Ventilzweig (T1,T3,T5;T2,T4,T6) eines jeden Phasenmoduls (8) des lastseitigen mehrphasigen Stromrichters (4) wenigstens ein zweipoliges Subsystem (10) aufweist, wobei als netzseitiger Stromrichter (2) wenigstens zwei mehrphasige netzgeführte Stromrichter (16) vorgesehen sind, die gleichspannungsseitig elektrisch in Reihe geschaltet sind und wechselspannungsseitig jeweils mit einer Sekundärwicklung eines Netztransformators verknüpft sind.

2. Umrichter nach Anspruch 1, **dadurch gekennzeichnet, dass** der netzgeführte Stromrichter (16) als Diodengleichrichter ausgeführt ist.

3. Umrichter nach Anspruch 1, **dadurch gekennzeichnet, dass** der netzgeführte Stromrichter (16) als Thyristorgleichrichter ausgeführt ist.

4. Umrichter nach Anspruch 1, **dadurch gekennzeichnet, dass** der netzgeführte Stromrichter (16) als halbgesteuerte Thyristorbrücke ausgeführt ist.

5. Umrichter nach Anspruch 1, **dadurch ge-kennzeichnet,** dass der netzgeführte Stromrichter (16) als Thyristor-Umkehrstromrichter ausgeführt ist.

6. Umrichter nach Anspruch 4, **dadurch gekennzeichnet, dass** als halbgesteuerte Brücken ein Diodengleichrichter und ein Thyristorgleichrichter vorgesehen sind, die gleichspannungsseitig elektrisch in Reihe geschaltet sind.

7. Umrichter nach einem der vorgenannten Ansprüche, **da-durch gekennzeichnet**, dass ein weiterer lastseitiger mehrphasiger Stromrichter (20) vorgesehen ist, der gleichspannungsseitig elektrisch parallel zum netzseitigen und zum ersten lastseitigen mehrphasigen Stromrichter (4) geschaltet ist.

8. Umrichter nach einem der vorgenannten Ansprüche mit wenigstens zwei mehrphasigen netzgeführten Stromrichtern (16), die elektrisch in Reihe geschaltet sind, **dadurch gekennzeichnet, dass** diese mehrphasigen netzgeführten Stromrichter (16) des netzseitigen Stromrichters (2) wechselspannungsseitig jeweils mit Anschlüssen einer unterspannungsseitigen Transformatorwicklung eines Netztransformators (18) verknüpft sind.

9. Umrichter nach Anspruch 8, **dadurch ge-kennzeichnet,** dass die unterspannungsseitigen Transformatorwicklungen derartig ausgebildet sind, dass diese untereinander einen vorbestimmten Verschiebungswinkel aufweisen.

## Claims

1. Converter having a mains-side power converter (2) and a load-side power converter (4), which are electrically conductively connected to one another on the DC voltage side, wherein a respective upper and lower valve branch (T1, T3, T5; T2, T4, T6) of each phase module (8) of the load-side polyphase power converter (4) has at least one two-pole subsystem (10), wherein at least two polyphase mains-commutated power converters (16) are provided as the mains-side power converter (2), which converters are connected electrically in series on the DC voltage side and are each linked on the AC voltage side to a secondary winding of a mains transformer.

2. Converter according to Claim 1, **characterized in that** the mains-commutated power converter (16) is in the form of a diode rectifier.

3. Converter according to Claim 1, **characterized in that** the mains-commutated power converter (16) is in the form of a thyristor rectifier.

4. Converter according to Claim 1, **characterized in that** the mains-commutated power converter (16) is in the form of a half-controlled thyristor bridge.

5. Converter according to Claim 1, **characterized in that** the mains-commutated power converter (16) is in the form of a thyristor reversible power converter.

6. Converter according to Claim 4, **characterized in that** a diode rectifier and a thyristor rectifier are provided as half-controlled bridges and are connected electrically in series on the DC voltage side.

7. Converter according to one of the abovementioned claims, **characterized in that** a further load-side polyphase power converter (20) is provided, and is connected on the DC voltage side electrically in parallel with the mains-side and the first load-side polyphase power converter (4).

8. Converter according to one of the abovementioned claims having at least two polyphase mains-commutated power converters (16) which are electrically connected in series, **characterized in that** these polyphase mains-commutated power converters (16) in the mains-side power converter (2) are each linked on the AC voltage side to connections of a low-voltage-side transformer winding of a mains transformer (18).

9. Converter according to Claim 8, **characterized in that** the low-voltage-side transformer windings are designed such that they have a predetermined shift angle with respect to one another.

## Revendications

1. Convertisseur de fréquence, comprenant un convertisseur (2) de courant du côté du réseau et un convertisseur (4) de courant du côté de la charge, qui sont reliés entre eux d'une manière conductrice de l'électricité du côté de la tension continue, dans lequel respectivement une branche de soupape (T1, T3, T5) supérieure et une branche de soupape (T2, T4, T6) inférieure de chaque module (8) de phase du convertisseur (4) de courant polyphasé du côté de la charge a au moins un sous-système (10) bipolaire, dans lequel il est prévu, comme convertisseur (2) de courant du côté du réseau, au moins deux convertisseurs (16) de courant commutés par le réseau, qui sont montés électriquement en série du côté de la tension continue et qui sont combinés du côté de la tension alternative respectivement à un enroulement secondaire d'un transformateur de réseau.

2. Convertisseur de fréquence suivant la revendication 1, **caractérisé en ce que** le convertisseur (16) de courant, commuté par le réseau, est réalisé sous la forme d'un redresseur à diode.

3. Convertisseur de fréquence suivant la revendication 1, **caractérisé en ce que** le convertisseur (16) de courant, commuté par le réseau, est réalisé sous la forme d'un redresseur à thyristor.

4. Convertisseur de fréquence suivant la revendication 1, **caractérisé en ce que** le convertisseur (16) de courant, commuté par le réseau, est réalisé sous la forme d'un pont à thyristor semi-commandé.

5. Convertisseur de fréquence suivant la revendication 1, **caractérisé en ce que** le convertisseur (16) de courant, commuté par le réseau, est réalisé sous la forme d'un convertisseur de courant à dispositif d'inversion à thyristor.

6. Convertisseur de fréquence suivant la revendication 4, **caractérisé en ce qu'**il est prévu comme pont semi-commandé, un redresseur à diode et un redresseur à thyristor, qui sont montés électriquement en série du côté de la tension continue.

7. Convertisseur de fréquence suivant l'une des revendications précédentes, **caractérisé en ce qu'**il est prévu un autre convertisseur (20) de courant polyphasé du côté de la charge, qui est monté en parallèle électriquement du côté de la tension continue avec le convertisseur du côté du réseau et avec le premier convertisseur (4) polyphasé du côté de la charge.

8. Convertisseur de fréquence suivant l'une des revendications précédentes, comprenant au moins deux convertisseurs (16) de courant, polyphasés et commutés par le réseau, qui sont montés électriquement en série, **caractérisé en ce que** ces convertisseurs (16) de courant, polyphasés et commutés par le réseau, du convertisseur (2) de courant du côté du réseau sont combinés du côté de la tension alternative respectivement à des bornes d'un enroulement du côté de la basse tension d'un transformateur (18) de réseau.

9. Convertisseur de fréquence suivant la revendication 8, **caractérisé en ce que** les enroulements du transformateur, du côté de la basse tension, sont constitués de manière à avoir entre eux un angle de décalage déterminé à l'avance.
